(19) Europäisches Patentamt
European Patent Office
Office européen des brevets

(11) **EP 3 206 057 B1**

(12) **EUROPEAN PATENT SPECIFICATION**

(45) Date of publication and mention
of the grant of the patent:
**28.06.2023 Bulletin 2023/26**

(21) Application number: **16185069.8**

(22) Date of filing: **22.08.2016**

(51) International Patent Classification (IPC):
*G02B 5/02* (2006.01)     *G09F 9/33* (2006.01)

(52) Cooperative Patent Classification (CPC):
**G02B 5/02; G02B 5/0289; G02B 5/0294**

(54) **REFLECTING FACE MASK AND LED DISPLAY DEVICE HAVING THE SAME**

REFLEKTIERENDE SCHUTZMASKE UND LED-ANZEIGEVORRICHTUNG DAMIT

MASQUE FACIAL RÉFLÉCHISSANT ET DISPOSITIF D'AFFICHAGE À DEL DOTÉ DE CELUI-CI

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **06.01.2016 CN 201610009097**

(43) Date of publication of application:
**16.08.2017 Bulletin 2017/33**

(73) Proprietor: **Leyard Optoelectronic Co., Ltd
Beijing 100091 (CN)**

(72) Inventor: **CHANG, Ming
Haidian District, Beijing 100091 (CN)**

(74) Representative: **Casalonga
Casalonga & Partners
Bayerstraße 71/73
80335 München (DE)**

(56) References cited:
**WO-A1-2008/139362     CN-A- 101 529 291
US-A1- 2009 257 215     US-A1- 2010 065 860**

## Description

## Technical field of the invention

The invention relates to the technical field of displays, and in particular to a reflecting face mask and a Light-Emitting Diode (LED) display device having the same.

## Background of the invention

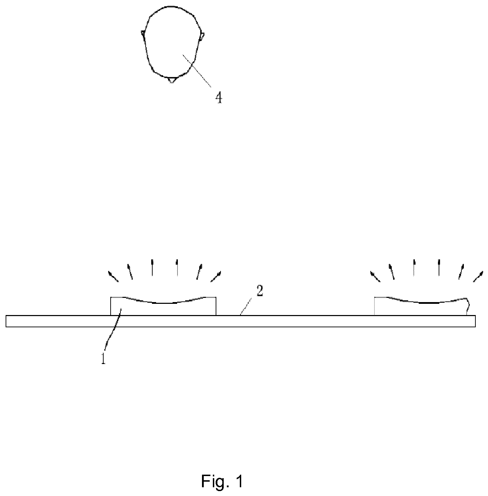

As shown in Fig. 1, light emitted by LED lamps 1 of a traditional LED display screen directly enters eyes of an audience 4 without passing through any media. In order to improve the contrast ratio of a display picture of the display screen, a black plastic face mask 2 will be filled between two LED lamps 1. In this case, a severe light intensity contrast, namely a glare phenomenon, exists between high-bright light of the LED lamps 1 and the black face mask 2.

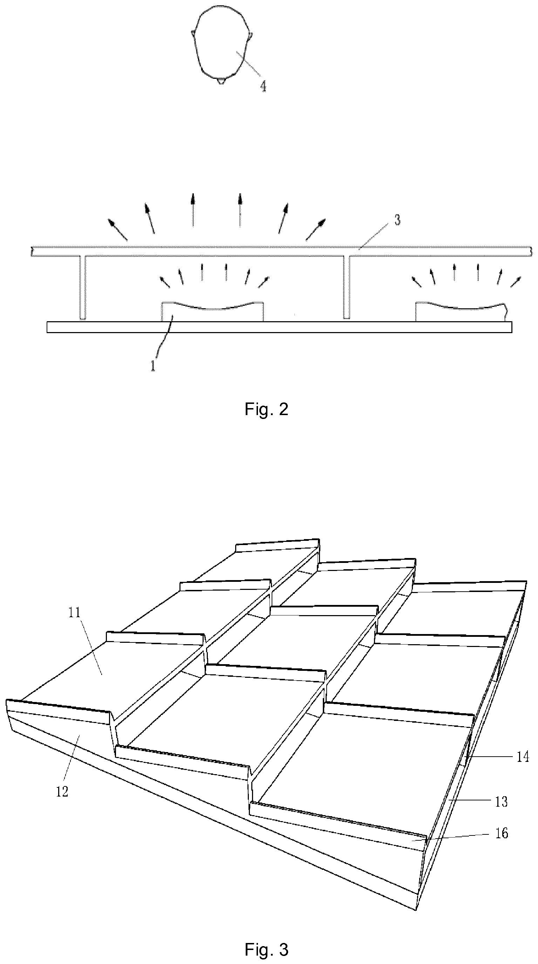

As shown in Fig. 2, in the prior art, an atomizing face mask 3 made from transparent plastic is mounted on a surface of the traditional LED display screen. Each LED lamp 1 is separately provided in a small box. In such a way, light emitted by the LED lamps 1 is directly emitted to the atomizing face mask 3 and then enters the eyes of the audience 4 through a frosted surface of plastic. According to the method, direct light enters human eyes. The effect of the method is not ideal.

Document D1(US2009/257215 A1) discloses a light emitting device, the light emitting device is provided with an LED substrate 12; a plurality of light-emitting diodes (LEDs) 21 mounted on the LED substrate 12; and a reflector 50 which is mounted on the LED substrate 12, has a first surface 52a, and a second surface 52b having a front rear relationship with the first surface 52a, reflects light emitted from one light-emitting diode 21 of the light-emitting diodes (LEDs) 21 by the first surface 52a, and reflects light from the light-emitting diode 21 adjacent to the one light-emitting diode 21 by the second surface 52b. Thus, in a backlight device using a solid-state light emitting element, such as a LED, luminance is made uniform by reducing luminance nonuniformity.

Document D2 (CN101529291 A) discloses a light emitting device, the light emitting device comprises a light guide plate and at least one light emitting diode. The reflective surface elements are spaced apart from each other, the reflective surface elements are arranged between the back surface and the front surface. The reflective surface element is relative to the back surface and the front surface (102) is non-parallel and has a surface facing the front surface (102) and a rear side facing the rear surface. The back surface of the reflective surface element faces the front surface of the adjacent reflective surface element. At least one light emitting diode is arranged for emitting light into two adjacent reflective surface elements, and an area (111) is formed between the upper part and the lower part. Because the reflective surface element is located in the light guide, so that both the rear surface and the front surface of the light guide plate can be made flat. The flat surface can be easily cleaned without dust and dirt.

Document D3 (US 2010/065860 A1) discloses a light emitting diode lighting device 10. The lighting device comprises a light guide plate 12, and a plurality of LEDs 16 accommodated in holes 14 arranged in the plane of the light guide. At least one hole has a first side face 18 for coupling light from any LED in the hole into the light guide and a second opposite side holes are arranged such that all first side facets are facing one direction.

Document D4 (WO2008 /139362 A1) discloses a cover 10 for an object like a light source 20, for example an OLED 21. In one preferred embodiment, the cover 10 comprises a transparent sheet 11 with microelements 12 on one surface that are partially covered by a reflective coating 13. The view through the cover 10 is thus blocked under certain viewing angles, helping to prevent a blinding of persons. Another embodiment of the cover comprises a metal sheet with stamped out flaps.

## Summary of the invention

The invention is set out in the appended set of claims.

A main objective of the invention is to provide a reflecting face mask and an LED display device having same, which are intended to solve the problem in the traditional art that a feeling of viewing an LED display screen is bad.

To this end, according to the invention, a reflecting face mask according to independent claim 1 is provided. The dependent claims relate to advantageous embodiments.

By applying the technical solution of the invention, a face mask unit may cover LED lamp beads, light emitted by the LED lamp beads is emitted to an inner surface of a top plate, the inner surface of the top plate reflects the light of the LED lamp beads to an outer surface of another face mask unit, and the outer surface forms diffuse reflection of the light reflected by the inner surface. In such a way, the light of the LED lamp beads is evenly scattered, and the light received by an audience is soft and even light. The structure improves a feeling of viewing an LED display screen by the audience.

## Brief description of the drawings

The drawings of the specification, forming a part of the invention, are used to provide further understanding of the invention. The schematic embodiments and illustrations of the invention are used to explain the invention, and do not form improper limits to the invention. In the drawings:

Fig. 1 shows a structural diagram of an LED display device with a black face mask in the prior art;
Fig. 2 shows a structural diagram of an LED display device with an atomizing face mask in the prior art;
Fig. 3 shows a space diagram of an embodiment of a face mask for an LED display device according to the invention;
Fig. 4 shows a side view of the LED display device in Fig. 3;
Fig. 5 shows another angle diagram of the LED display device in Fig. 3;
Fig. 6 shows a sectional view of the LED display device in Fig. 3; and
Fig. 7 shows a light path direction diagram of the LED display device in Fig. 3.

Wherein, the drawings comprise the following drawing marks:
1, LED lamp; 2, black plastic face mask; 3, atomizing face mask; 4, audience; 10, face mask unit; 11, top plate; 12, first side plate; 13, light emergence gap; 14, partition plate; 15, second side plate; 16, shielding plate; 20, LED lamp bead; 30, face plate; 100, first region; and 200, second region.

## Detailed description of the embodiments

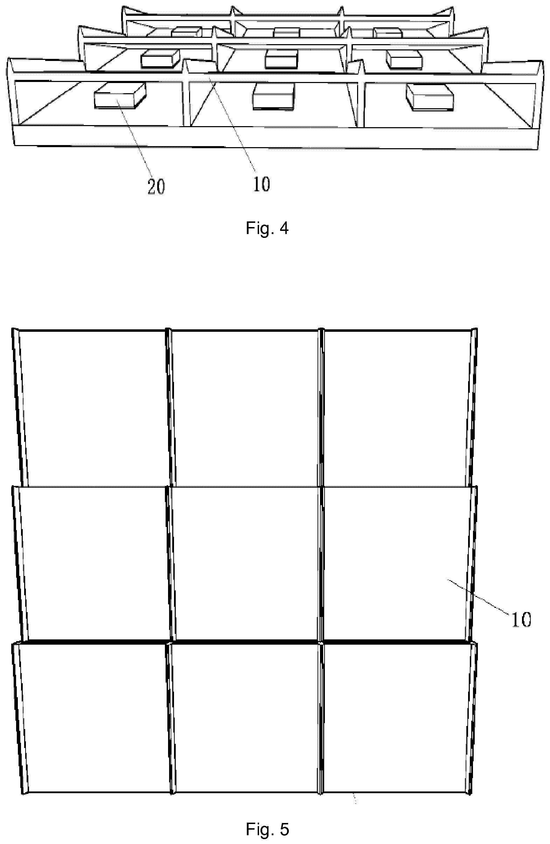

It is important to note that the embodiments of the invention and the characteristics in the embodiments can be combined under the condition of no conflicts. The invention will be illustrated below with reference to the drawings and the embodiments in detail.
As shown in Fig. 3 to Fig. 5, a reflecting face mask of the present embodiment comprises: a face mask unit 10. The face mask unit 10 comprises: a top plate 11 and two first side plates 12. The top plate 11 is flat, an inner surface of the top plate 11 is a reflecting surface, and an outer surface of the top plate 11 is a diffuse reflecting surface. The two first side plates 12 are provided oppositely and connected with the top plate 11 respectively, a size of a first end of each of the first side plates 12 is greater than that of a second end of the first side plate 12 to make the top plate 11 provided obliquely, and a light emergence gap 13 is formed between the first ends of the two first side plates 12.
By applying the technical solution of the present embodiment, the face mask unit may cover LED lamp beads. Light emitted by the LED lamp beads is then emitted to an inner surface of the top plate 11, the inner surface of the top plate 11 reflects the light of the LED lamp beads to an outer surface of another face mask unit, and the outer surface forms diffuse reflection of the light reflected by the inner surface. In such a way, the light of the LED lamp beads is evenly scattered, and the light received by an audience is soft and even light. Such a structure improves a feeling of viewing an LED display screen by the audience.
As shown in Fig. 3 and Fig. 4, in the technical solution of the present embodiment, the face mask unit

10 further comprises a partition plate 14 which is provided between the two first side plates 12 so as to partition the light emergence gap 13 into multiple sub-outlets. The structure improves, on one hand, the strength of the face mask unit, and enables, on the other hand, the face mask unit 10 to divide the LED display screen into different units, thereby avoiding mutual interference of light emitted by all small units in the LED display screen. Specifically, the face mask unit 10 provides the partition plates 14 according to the number of the LED lamp beads. Further specifically, the outer surface of the top plate is white. The light emergence gap 13 is a rectangular opening.
As shown in Fig. 3 to Fig. 5, in the technical solution of the present embodiment, there are multiple face mask units 10 which are provided in multiple rows, and the first ends of the two first side plates 12 of one of two adjacent face mask units 10 are adjacent to the second ends of the two first side plates 12 of the other face mask unit 10. The structure ensures that light emitted by the LED lamp beads is reflected by the inner surface and then reflected to the outer surface of the adjacent the other face mask unit 10 through the light emergence gap 13. In such a way, the layout between the face mask units 10 is compact, and the viewing effect is good. Specifically, the multiple face mask units 10 are of an integrated structure. The structure is easy to machine.
As shown in Fig. 3 to Fig. 7, in the technical solution of the present embodiment, the face mask unit 10 further comprises a second side plate 15, and the second side plate 15 is connected between the second ends of the two first side plates 12. When the first side plates are trapezoidal, the structure of providing the second side plate 15 at the second ends of the two first side plates 12 ensures that light will not leak from the face mask unit 10.
In the technical solution of the present embodiment (not shown in the figure), a chromium-plated layer is provided on the inner surface of the top plate 11. The structure is easy to machine and manufacture, good in reflecting effect, and lower in cost.
As shown in Fig. 3 to Fig. 5, in the technical solution of the present embodiment, the face mask unit 10 further comprises a shielding plate 16, the shielding plate 16 comprises first shielding plates, and the first shielding plates are disposed on the outer surface of the top plate 11 and correspond to the two first side plates 12 in position. Furthermore, the shielding plate 16 further comprises a second shielding plate, and the second shielding plate is provided on the outer surface of the top plate 11 and corresponds to the partition plate 14 in position. The structure ensures that light reflected by the outer surface of the face mask unit 10 cannot mutually interfere.
The invention may be employed with an LED display device. The LED display device according to the invention comprises a face plate 30, provided with LED lamp beads 20, and a reflecting face mask. The reflecting face mask is the above reflecting face mask, and the reflecting face mask covers the face plate 30. The LED display device with the structure has a good feeling of viewing.

A reflecting plating layer is provided on the face plate 30 of the invention. Thus, the strength of light can be improved, and the loss of light is reduced.

The technical solution of the invention not only can improve the feeling of viewing by avoiding direct light, but also has an effect of 100% pixel filling rate, namely avoids glare. The area of a diffuse reflecting surface on a face mask is larger, so that each pixel exclusively has a reflecting surface, and the size thereof is a square value of an interval between pixels basically. The size of an LED lamp of a prior LED screen is small, and the ratio of the light-emitting area to the total area is small, which is about 10% to 30% usually, so a glare phenomenon will be caused. A P4 (4mm pixel interval) LED display device is taken as an example below.

The size of an LED lamp bead is 1.6mm×1.6mm, a pixel filling rate of an LED lamp bead of a traditional display screen is S1, an LED pixel filling rate of the invention is S2, and they are calculated as follows.

$$S1=1.6*1.6/4*4=16\%; \text{ and}$$

and

$$S2=4*4/4*4=100\%.$$

A great pixel filling rate brings a qualitative leap to a feeling of viewing.

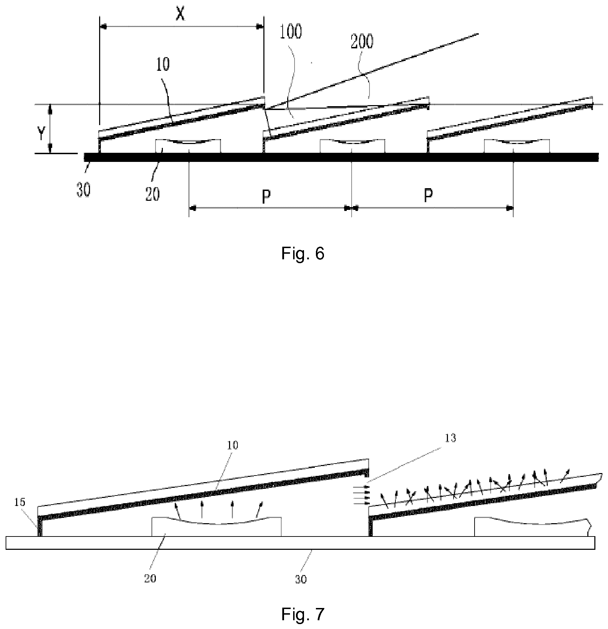

Based on an interpretation on an LED emergence light path of the invention, as shown in Fig. 6 and Fig. 7, an LED pixel interval is P, the thickness of the face mask of the invention is Y, and the height of a single face mask is X. The pre-determined serial number of a reflecting face mask above a certain LED lamp bead is N, after being emitted, light is diffusely reflected on the N+1th reflecting face mask, and when being located in a first region 100, light reflected by an inner surface of the reflecting face mask can participate in diffuse reflection; and when being located in a second region 200, light reflected by the inner surface of the reflecting face mask cannot participate in diffuse reflection and cannot be projected to the N+2th reflecting face mask.

**Claims**

1. A reflecting face mask for covering a face plate (30) provided with LED lamp beads (20), comprising: a face mask unit (10), the face mask unit (10) comprises:

    a top plate (11), the top plate (11) is a flat plate, an inner surface of the top plate (11) is a reflecting surface, an outer surface of the top plate (11) is a diffuse reflecting surface; and

two first side plates (12), provided oppositely and connected with the top plate (11) respectively, a size of a first end of each of the first side plates (12) is greater than that of a second end of the first side plate (12) to make the top plate (11) provided obliquely, a light emergence gap (13) is formed between the first ends of the two first side plates (12),

the face mask unit (10) further comprises a partition plate (14) which is provided between the two first side plates (12) so as to partition the light emergence gap (13) into multiple sub-outlets; the face mask unit (10) further comprises a second side plate (15), the second side plate (15) is connected between the second ends of the two first side plates (12),

wherein the face mask unit (10) further comprises a shielding plate (16), and the shielding plate (16) comprises first shielding plates, the first shielding plates are provided on the outer surface of the top plate (11) and correspond to the two first side plates (12) in position;

the shielding plate (16) further comprises a second shielding plate, the second shielding plate is provided on the outer surface of the top plate (11) and corresponds to the partition plate (14) in position;

wherein there are multiple face mask units (10) which are arranged in multiple rows, and the first ends of the two first side plates (12) of one of two adjacent face mask units (10) are adjacent to the second ends of the two first side plates (12) of the other face mask unit (10).

2. The reflecting face mask according to claim 1, wherein the multiple face mask units (10) are of an integrated structure.

3. The reflecting face mask according to claim 1, wherein the outer surface of the top plate (11) is white.

4. The reflecting face mask according to claim 1, wherein a chromium-plated layer is provided on the inner surface of the top plate (11).

5. A Light-Emitting Diode (LED) display device, comprising a face plate (30), provided with LED lamp beads (20), and a reflecting face mask, wherein the reflecting face mask is the reflecting face mask according to any one of claims 1 to 4, and the reflecting face mask covers the face plate (30).

6. The LED display device according to claim 5, wherein a reflecting plating layer is provided on the face plate (30).

**Patentansprüche**

1. Reflektierende Schutzmaske zum Abdecken einer Frontplatte (30), die mit LED-Leuchtkügelchen (20) versehen ist, umfassend: eine Schutzmaskeneinheit (10), wobei die Schutzmaskeneinheit (10) umfasst:

   eine obere Platte (11), wobei die obere Platte (11) eine flache Platte ist, eine innere Oberfläche der oberen Platte (11) eine reflektierende Oberfläche ist, eine äußere Oberfläche der oberen Platte (11) eine diffus reflektierende Oberfläche ist; und
   zwei erste Seitenplatten (12), die gegenüberliegend bereitgestellt werden und jeweils mit der oberen Platte (11) verbunden sind, wobei eine Größe eines ersten Endes jeder der ersten Seitenplatten (12) größer als die eines zweiten Endes der ersten Seitenplatte (12) ist, damit die obere Platte (11) schräg bereitgestellt wird, wobei sich eine Lichtaustrittslücke (13) zwischen den ersten Enden der beiden ersten Seitenplatten (12) bildet,
   wobei die Schutzmaskeneinheit (10) ferner eine Trennplatte (14) umfasst, die zwischen den beiden ersten Seitenplatten (12) bereitgestellt wird, um die Lichtaustrittslücke (13) in mehrere Unterauslässe zu unterteilen; wobei die Schutzmaskeneinheit (10) ferner eine zweite Seitenplatte (15) umfasst, wobei die zweite Seitenplatte (15) zwischen den zweiten Enden der beiden ersten Seitenplatten (12) verbunden ist,
   wobei die Schutzmaskeneinheit (10) ferner eine Abschirmplatte (16) umfasst, und die Abschirmplatte (16) erste Abschirmplatten umfasst, wobei die ersten Abschirmplatten auf der äußeren Oberfläche der oberen Platte (11) bereitgestellt werden und den beiden ersten Seitenplatten (12) positionsmäßig entsprechen;
   wobei die Abschirmplatte (16) ferner eine zweite Abschirmplatte umfasst, die zweite Abschirmplatte auf der äußeren Oberfläche der oberen Platte (11) bereitgestellt wird und der Trennplatte (14) positionsmäßig entspricht;
   wobei es mehrere Schutzmaskeneinheiten (10) gibt, die in mehreren Reihen angeordnet sind, und die ersten Enden der beiden ersten Seitenplatten (12) von einer von zwei angrenzenden Schutzmaskeneinheiten (10) an die zweiten Enden der beiden ersten Seitenplatten (12) der anderen Schutzmaskeneinheit (10) angrenzend sind.

2. Reflektierende Schutzmaske nach Anspruch 1, wobei die mehreren Schutzmaskeneinheiten (10) eine integrierte Struktur aufweisen.

3. Reflektierende Schutzmaske nach Anspruch 1, wobei die äußere Oberfläche der oberen Platte (11) weiß ist.

4. Reflektierende Schutzmaske nach Anspruch 1, wobei eine chromierte Schicht auf der inneren Oberfläche der oberen Platte (11) bereitgestellt wird.

5. Leuchtdioden- (LED) Anzeigevorrichtung, umfassend: eine Frontplatte (30), die mit LED-Leuchtkügelchen (20) versehen ist, und eine reflektierende Schutzmaske, wobei die reflektierende Schutzmaske die reflektierende Schutzmaske nach einem der Ansprüche 1 bis 4 ist, und die reflektierende Schutzmaske die Frontplatte (30) abdeckt.

6. LED-Anzeigevorrichtung nach Anspruch 5, wobei eine reflektierende Beschichtung auf der Frontplatte (30) bereitgestellt wird.

**Revendications**

1. Masque facial réfléchissant pour recouvrir une plaque faciale (30) doté de perles de lampe à LED (20), comprenant : une unité de masque facial (10), l'unité de masque facial (10) comprend :

   une plaque supérieure (11), la plaque supérieure (11) est une plaque plate, une surface intérieure de la plaque supérieure (11) est une surface réfléchissante, une surface extérieure de la plaque supérieure (11) est une surface réfléchissante diffuse ; et
   deux premières plaques latérales (12), prévues de manière opposée et reliées à la plaque supérieure (11) respectivement, une taille d'une première extrémité de chacune des premières plaques latérales (12) est supérieure à celle d'une deuxième extrémité de la première plaque latérale (12) pour que la plaque supérieure (11) soit prévue de manière oblique, un espace d'émergence de lumière (13) est formé entre les premières extrémités des deux premières plaques latérales (12),
   l'unité de masque facial (10) comprend en outre une plaque de séparation (14) qui est prévue entre les deux premières plaques latérales (12) de manière à partitionner l'espace d'émergence de lumière (13) en de multiple sorties secondaires ; l'unité de masque facial (10) comprend en outre une deuxième plaque latérale (15), la deuxième plaque latérale (15) est reliée entre les deuxièmes extrémités des deux premières plaques latérales (12),
   dans lequel l'unité de masque facial (10) comprend en outre une plaque de protection (16), et la plaque de protection (16) comprend des premières plaques de protection, les premières plaques de protection sont prévues sur la surface extérieure de la plaque supérieure (11) et correspondent aux deux premières plaques latérales (12) en position ;

la plaque de protection (16) comprend en outre une deuxième plaque de protection, la deuxième plaque de protection est prévue sur la surface extérieure de la plaque supérieure (11) et correspond à la plaque de partition (14) en position ;

dans lequel il y a de multiples unités de masque facial (10) qui sont agencées en de multiples rangées, et les premières extrémités des deux premières plaques latérales (12) d'une parmi deux unités de masque facial adjacentes (10) sont adjacentes aux deuxièmes extrémités des deux premières plaques latérales (12) de l'autre unité de masque facial (10).

2. Masque facial réfléchissant selon la revendication 1, dans lequel les multiples unités de masque facial (10) sont d'une structure intégrée.

3. Masque facial réfléchissant selon la revendication 1, dans lequel la surface extérieure de la plaque supérieure (11) est blanche.

4. Masque facial réfléchissant selon la revendication 1, dans lequel une couche plaquée de chrome est prévue sur la surface intérieure de la plaque supérieure (11).

5. Dispositif d'affichage à diode électroluminescente (LED), comprenant une plaque faciale (30), dotée de perles de lampe à LED (20), et un masque facial réfléchissant, dans lequel le masque facial réfléchissant est le masque facial réfléchissant selon l'une quelconque des revendications 1 à 4, et le masque facial réfléchissant recouvre la plaque faciale (30).

6. Dispositif d'affichage à LED selon la revendication 5, dans lequel une couche de placage réfléchissante est prévue sur la plaque faciale (30).

Fig. 1

Fig. 2

Fig. 3

Fig. 4

Fig. 5

Fig. 6

Fig. 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2009257215 A1
- CN 101529291 A
- US 2010065860 A1
- WO 2008139362 A1